# EUROPEAN PATENT APPLICATION

(11) **EP 3 421 347 A1**
(43) Date of publication of application: **02.01.2019**
(21) Application number: 17178694.0
(22) Date of filing: 29.06.2017
(51) Int. Cl.: B63B 1/04, B63H 5/125, B63B 35/44

(54) **A HIGHLY MANOEUVRABLE VESSEL**

(71) Applicant: BV Scheepswerf Damen Gorinchem, 4200 AA Gorinchem (NL)
(72) Inventor: Grunstra, Hedrik Jelle, 4205 AK Gorinchem (NL)
(74) Representative: De Vries & Metman

(57) **Abstract**

A highly manoeuvrable vessel (1) comprises a hull (2) including a waterline which surrounds an imaginary waterline area of which the ratio between length and width is less than 1.2. The vessel (1) also comprises a superstructure (3) which is located on the hull (2) and a plurality of drive units (10) for propelling the vessel (1). Each of the drive units (10) is rotatable with respect to the hull (2) about an upwardly directed axis of rotation. The axes of rotation are located at angular distance from each other about a centre (C) of the waterline area.

## Description

The present invention relates to a highly manoeuvrable vessel.

Such a vessel is known in the field of ships which are used on relatively small lakes, rivers, harbours, etc.

An object of the invention is to provide an improved highly manoeuvrable vessel.

This object is accomplished with the vessel according to the invention, which comprises a hull including a waterline which surrounds an imaginary waterline area of which the ratio between length and width is less than 1.2, a superstructure located on the hull and a plurality of drive units for propelling the vessel, wherein each of the drive units is rotatable with respect to the hull about an upwardly directed axis of rotation, wherein the axes of rotation are located at angular distance from each other about a centre of the waterline area.

Due to the relatively small ratio between length and width of the waterline area of the hull and the presence of a plurality of rotatable drive units the vessel can be propelled in different directions in the horizontal plane as well as rotated about itself around a vertical axis. Furthermore, the presence of the rotatable drive units makes a rudder unnecessary. The vessel can have several applications. For example, the vessel may be used as a mobile control tower in a harbour; it can be moved to any desired location and slowly turned around at that location to provide a traffic controller a view around the vessel. Similarly, the vessel may be adapted to a floating restaurant which can be moved to different desired locations whereas it turns around at each location to provide different views to the guests. It is noted that the waterline is the line where the hull of the vessel meets the surface of the water.

The multiple drive units may be controlled by a smart control system which automatically sets appropriate power output by each of the drive units and which automatically adjusts the angle of each of the drive units with respect to the hull when a certain path of sailing is requested.

In practice the waterline may be substantially circular. In other words, the hull may be substantially circular in plan view. For example, it may have the shape of a saucer.

The vessel may be provided with at least three drive units wherein their axes of rotation are located at equiangular distance about the centre of the waterline area. In case of a circular hull this makes the hull including the drive units rotational symmetric, which facilitates automatic navigation control of the vessel.

In a preferred embodiment the vessel is provided with at least four drive units, since this further simplifies automatic navigation control in case of sailing straight on.

The drive units may be azimuth thrusters which are well-known configurations of marine propellers placed in pods that can be rotated to any horizontal angle.

In a preferred embodiment the vessel is a tourist boat and the superstructure is provided with at least a row of seats or benches, which row extends in circumferential direction of the superstructure along at least more than a half of the circumference of the superstructure.

The seats or benches may be provided with back rests that are located at the sides of the seats or benches which are closest to the centre of the waterline area. This provides great comfort to passengers who like to have a wide view in outward direction. Depending on the size of the vessel a plurality of rows of seats or benches may be located behind each other, for example like an auditorium seating layout.

The superstructure may comprise a plurality of docking platforms for docking at a landing platform or a quay or the like.

The docking platforms may be located at equiangular distance about the centre of the waterline area. This provides great flexibility during boarding and unboarding, and may minimize boarding and unboarding duration.

The docking platforms may project in radial direction from the centre of the waterline area with respect to the remainder of the superstructure.

The invention will hereafter be elucidated with reference to very schematic drawings showing an embodiment of the invention by way of example.
Fig. 1 is a perspective view of an embodiment of a vessel according to the invention.
Fig. 2 is a side view of the vessel of Fig. 1.
Fig. 3 is a top view of the vessel of Fig. 1.
Fig. 4 is a sectional view of the vessel of Fig. 1 along the line IV-IV in Fig. 2.

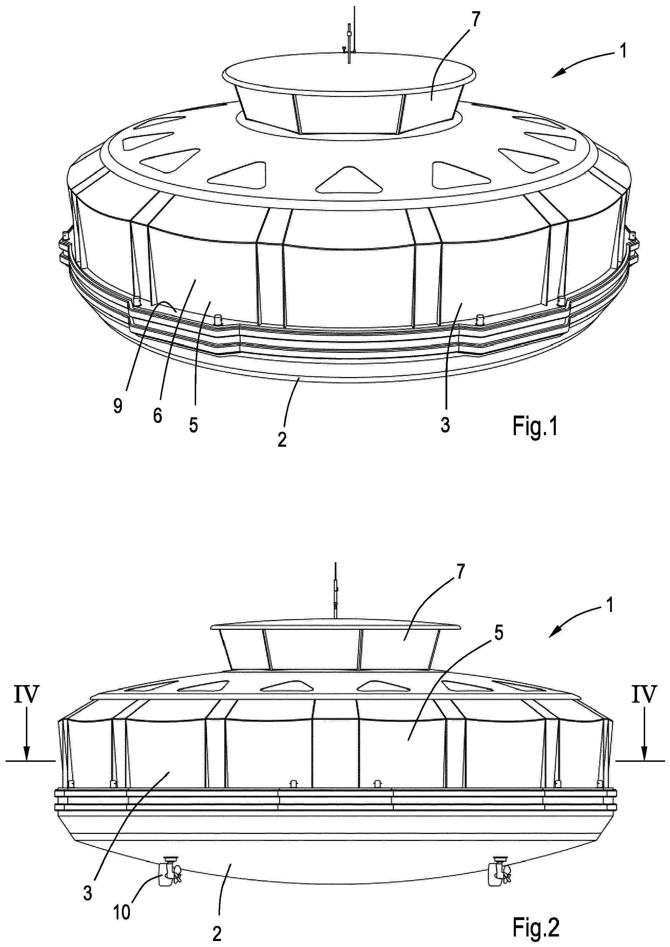

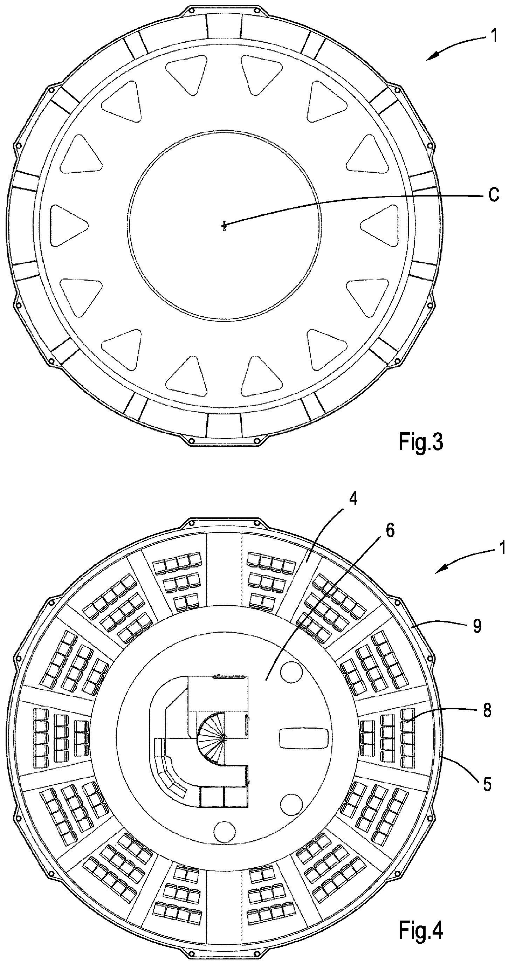

Figs. 1-4 show different views of an embodiment of a vessel 1 according to the invention. In this embodiment the vessel 1 is a tourist boat which can be used for river cruises, but a lot of alternative applications are conceivable. The vessel 1 comprises a saucer-shaped hull 2 which has a circular waterline. The waterline envelopes an imaginary waterline area, which has a centre C as indicated in Fig. 3.

A superstructure 3 is mounted on the hull 2. The superstructure 3 of this embodiment has a main deck 4 which is also substantially circular in plan view, see Fig. 4. It has a circumferential wall of windows 5 which envelopes a passenger saloon 6 and provides an optimal view for passengers in the passenger saloon 6 in different directions. On top of the vessel 1 is an upper deck or bridge 7, which provides a control room for a navigation officer. In the embodiment as shown the passenger saloon 6 has a closed roof, but an alternative embodiment may have an open roof or partly open roof.

Fig. 4 shows that the passenger saloon 6 is provided with a number of concentrically arranged rows of seats 8. The circular rows extend parallel to the circumferential wall of windows 5 and are arranged such that their back rests are located at sides of the seats 8 which are closest to the centre C. This means that the passengers have a radial view in outward direction. It is noted that the circular rows of seats 8 are interrupted by aisles.

The superstructure 3 is provided with six docking platforms 9 for docking at a landing platform (not shown), but a different number of docking platforms 9 is conceivable. The docking platforms 9 are located at equiangular distance about the centre C and project in radial outward direction from the centre with respect to the remainder of the superstructure 3.

The vessel 1 also comprises four azimuth thrusters 10, which are located at equiangular distance about the centre C. Each of the thrusters 10 is rotatable with respect to the hull 2 about an upwardly directed axis of rotation. Preferably, the thrusters 10 are driven by electric motors, but alternative prime movers are also conceivable.

The tourist boat 1 as shown in Figs. 1-4 provides a lot of pleasure and comfort to passengers since all passengers have a view in outward direction without being obstructed by a neighbour such as in case of conventional tourist boats. Furthermore, the tourist boat 1 provides the opportunity to stop at a certain location and/or turn around about the centre C such that all passengers can have a view on an attraction located at a single side of the boat 1. The plurality of the azimuth thrusters 10 can be operated by an automatic control device (not shown), which controls the output power and direction of each of the thrusters 10 in response to a navigation request.

The invention is not limited to the embodiment shown in the drawings and described hereinbefore, which may be varied in different manners within the scope of the claims and their technical equivalents. For example, the hull may have a waterline area which has an oval shape or polygonal shape.

## Claims

1. A highly manoeuvrable vessel (1), comprising a hull (2) including a waterline which surrounds an imaginary waterline area of which the ratio between length and width is less than 1.2, a superstructure (3) located on the hull (2) and a plurality of drive units (10) for propelling the vessel (1), wherein each of the drive units (10) is rotatable with respect to the hull (2) about an upwardly directed axis of rotation, wherein the axes of rotation are located at angular distance from each other about a centre (C) of the waterline area.

2. A vessel (1) according to claim 1, wherein the waterline is substantially circular.

3. A vessel (1) according to claim 1 or 2, wherein the vessel (1) is provided with at least three drive units (10) and their axes of rotation are located at equiangular distance about the centre (C) of the waterline area.

4. A vessel (1) according to claim 3, wherein the vessel (1) is provided with at least four drive units (10).

5. A vessel (1) according to one of the preceding claims, wherein the drive units are azimuth thrusters (10).

6. A vessel (1) according to one of the preceding claims, wherein the vessel is a tourist boat (1) and the superstructure (3) is provided with at least a row of seats (8) or benches, which row extends in circumferential direction of the superstructure (3) along at least more than a half of the circumference of the superstructure (3).

7. A vessel (1) according to claim 6, wherein the seats (8) or benches are provided with back rests that are located at the sides of the seats (8) or benches which are closest to the centre (C) of the waterline area.

8. A vessel (1) according to claim 6 or 7, wherein a plurality of rows (8) of seats or benches are located behind each other.

9. A vessel (1) according to one of the preceding claims, wherein the superstructure (3) comprises a plurality of docking platforms (9) for docking at a landing platform or a quay or the like.

10. A vessel (1) according to claim 9, wherein the docking platforms (9) are located at equiangular distance about the centre (C) of the waterline area.

11. A vessel (1) according to claim 9 or 10, wherein the docking platforms (9) project in radial direction from the centre (C) of the waterline area with respect to the remainder of the superstructure (3).
